(19) Europäisches Patentamt
European Patent Office
Office européen des brevets

(11) EP 4 084 132 A1

(12) EUROPEAN PATENT APPLICATION
published in accordance with Art. 153(4) EPC

(43) Date of publication:
02.11.2022 Bulletin 2022/44

(51) International Patent Classification (IPC):
H01M 4/1395 (2010.01)      H01M 4/1391 (2010.01)
H01M 4/1393 (2010.01)      H01M 4/04 (2006.01)
H01M 10/052 (2010.01)      H01M 4/02 (2006.01)

(21) Application number: 21775993.5

(22) Date of filing: 23.03.2021

(52) Cooperative Patent Classification (CPC):
H01M 4/02; H01M 4/04; H01M 4/1391;
H01M 4/1393; H01M 4/1395; H01M 10/052;
Y02E 60/10; Y02P 70/50

(86) International application number:
PCT/KR2021/003552

(87) International publication number:
WO 2021/194205 (30.09.2021 Gazette 2021/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2020  KR 20200037695

(71) Applicant: LG Energy Solution, Ltd.
Seoul 07335 (KR)

(72) Inventors:
• CHAE, Oh Byong
Daejeon 34122 (KR)

• KIM, Ye Ri
Daejeon 34122 (KR)
• LEE, Su Yeon
Daejeon 34122 (KR)
• JEON, Seo Young
Daejeon 34122 (KR)
• HWANG, Seung Hae
Daejeon 34122 (KR)

(74) Representative: Hoffmann Eitle
Patent- und Rechtsanwälte PartmbB
Arabellastraße 30
81925 München (DE)

(54) **METHOD FOR MANUFACTURING NEGATIVE ELECTRODE**

(57)    Provided is a method of manufacturing a negative electrode, which includes: providing a negative electrode roll on which a negative electrode structure including a negative electrode current collector, a first negative electrode active material layer formed on one side of the negative electrode current collector, and a second negative electrode active material layer formed on the other side of the negative electrode current collector is wound; preparing a pre-lithiation bath including an impregnation section and a pre-lithiation section and containing a pre-lithiation solution, wherein the impregnation section and the pre-lithiation section are partitioned and sequentially provided; unwinding the negative electrode structure from the negative electrode roll, moving the negative electrode structure to the impregnation section, and impregnating the negative electrode structure with the pre-lithiation solution; and pre-lithiating the negative electrode structure by moving the same from the impregnation section to the pre-lithiation section, wherein the pre-lithiation is carried out by alternately electrochemically charging the first negative electrode active material layer and the second negative electrode active material layer in the pre-lithiation section.

[FIG. 1]

EP 4 084 132 A1

**Description**

[Technical Field]

Cross-Reference to Related Application

This application claims priority to and the benefit of Korean Patent Application No. 10-2020-0037695, filed on March 27, 2020, the disclosure of which is incorporated herein by reference in its entirety.

Technical Field

The present invention relates to a method of manufacturing a negative electrode.

[Background Art]

With the recent rapid spread of electronic devices using a battery, such as mobile phones, notebook computers, and electric vehicles, and the like, the demand for small, lightweight, and relatively high-capacity secondary batteries is rapidly increasing. In particular, lithium secondary batteries have attracted attention as a driving power source for portable devices due to their light weight and high energy density. Accordingly, there have been active research and development efforts to improve the performance of lithium secondary batteries.

The lithium secondary batteries generally include a positive electrode, a negative electrode, a separator interposed between the positive electrode and the negative electrode, an electrolyte, an organic solvent, and the like. In addition, in the positive electrode and the negative electrode, an active material layer including a positive electrode active material or a negative electrode active material may be formed on a current collector. In general, a lithium-containing metal oxide such as $LiCoO_2$, $LiMn_2O_4$, or the like is used as a positive electrode active material in the positive electrode, and accordingly, a carbon-based material or a silicon-based material, which does not contain lithium, is used as a negative electrode active material in the negative electrode.

In the case of such a negative electrode, a passivation film such as a solid electrolyte interface layer (SEI layer) is formed on a surface of the negative electrode during initial charging, and the passivation film improves the aging of the negative electrode structure and the reversibility of the negative electrode by preventing the penetration of an organic solvent into the negative electrode and suppressing a decomposition reaction of the organic solvent, and thus enables its use in a negative electrode. However, since the formation of the passivation film is an irreversible reaction, the consumption of lithium ions is caused, resulting in a decrease in the capacity of a battery, and as battery cycles are repeated, lithium ions are consumed, and capacity and cycle lifetime are reduced.

Therefore, negative electrode pre-lithiation methods (i.e., intercalation of lithium into the above-described negative electrode) for forming a passivation film on a surface of the negative electrode in advance and thus preventing a decrease in capacity and improve cycle lifetime have been developed.

For example, pre-lithiation methods such as bringing lithium metal into contact with a negative electrode structure to diffuse lithium into the negative electrode structure or placing a negative electrode structure in a lithium salt-containing solution and electrochemically charging the negative electrode structure while using lithium metal as a counter electrode are known.

Korean Patent Registration No. 10-0291067 discloses a method of pre-lithiating a carbon electrode and a method of manufacturing a lithium secondary battery using the same.

[Related-Art Document]

[Patent Document]

Korean Patent Registration No. 10-0291067

[Disclosure]

[Technical Problem]

The present invention is directed to providing a method of manufacturing a negative electrode, in which a negative electrode structure including a negative electrode active material layer on both sides is pre-lithiated in a roll-to-roll manner, wherein the two negative electrode active material layers are pre-lithiated to the same extent, uniform and stable pre-lithiation is achieved, the uniformity of negative electrode quality is improved, and the initial efficiency and lifetime characteristics of a negative electrode are improved.

[Technical Solution]

One aspect of the present invention provides a method of manufacturing a negative electrode, which includes: providing a negative electrode roll on which a negative electrode structure including a negative electrode current collector, a first negative electrode active material layer formed on one side of the negative electrode current collector, and a second negative electrode active material layer formed on the other side of the negative electrode current collector is wound; preparing a pre-lithiation bath including an impregnation section and a pre-lithiation section and containing a pre-lithiation solution, wherein the impregnation section and the pre-lithiation section are partitioned and sequentially provided; unwinding the negative electrode structure from the negative electrode roll, moving the negative electrode structure to the impregnation section, and impregnating the negative electrode structure with the pre-lithiation solution; and pre-lithiating the negative electrode structure by moving the same from the impregnation section to the pre-lithiation section, wherein the pre-lithiation is carried out by alternately electrochemically charging the first negative electrode active material layer and the second negative electrode active material layer in the pre-lithiation section.

[Advantageous Effects]

A method of manufacturing a negative electrode of the present invention is characterized in that a negative electrode structure including a negative electrode active material layer on both sides is pre-lithiated in a roll-to-roll manner as the two negative electrode active material layers are alternately electrochemically charged. When a negative electrode structure travels in a roll-to-roll manner, the equipment may shake, causing two negative electrode active material layers to be pre-lithiated in an unbalanced manner, and the negative electrode structure may be distorted because lithium ions are particularly concentrated in one of the negative electrode active material layers. However, when the method of manufacturing a negative electrode of the present invention is used, since two negative electrode active material layers are alternately electrochemically charged, the two negative electrode active material layers are pre-lithiated to the same extent, and thus uniform and stable pre-lithiation is possible. Therefore, a negative electrode manufactured using the method of manufacturing a negative electrode of the present invention has more uniform quality and improved initial efficiency and lifetime characteristics.

[Description of Drawings]

FIG. 1 is a diagram for schematically illustrating a method of manufacturing a negative electrode of the present invention.
FIG. 2 is a diagram for schematically illustrating a method of manufacturing a negative electrode of the present invention.

[Modes of the Invention]

Terms and words used in this specification and the claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.
The terms used in the present specification have been used only for the purpose of describing exemplary embodiments and are not intended to limit the present invention. Singular expressions include plural expressions unless the context clearly indicates otherwise.
It will be understood that terms such as "comprises," "comprising," "includes," "including," "has" or "having," when used in the present specification, specify the presence of stated features, numbers, steps, components, or combinations thereof and do not preclude the possibility of the presence or addition of one or more other features, numbers, steps, components, or combinations thereof.
In the present specification, an average particle diameter ($D_{50}$) may be defined as a particle diameter corresponding to the 50% cumulative volume in a particle diameter distribution curve. The average particle diameter ($D_{50}$) may be measured using, for example, a laser diffraction method. The laser diffraction method generally allows for the measurement of a particle diameter ranging from a submicron level to several millimeters and can produce a result having high reproducibility and high resolution.
Hereinafter, the present invention will be described in detail.

<Method of manufacturing negative electrode>

The present invention relates to a method of manufacturing a negative electrode, and more particularly, to a method of manufacturing a negative electrode for a lithium secondary battery.

A method of manufacturing a negative electrode of the present invention includes: providing a negative electrode roll on which a negative electrode structure including a negative electrode current collector, a first negative electrode active material layer formed on one side of the negative electrode current collector, and a second negative electrode active material layer formed on the other side of the negative electrode current collector is wound; preparing a pre-lithiation bath including an impregnation section and a pre-lithiation section and containing a pre-lithiation solution, wherein the impregnation section and the pre-lithiation section are partitioned and sequentially provided; unwinding the negative electrode structure from the negative electrode roll, moving the negative electrode structure to the impregnation section, and impregnating the negative electrode structure with the pre-lithiation solution; and pre-lithiating the negative electrode structure by moving the same from the impregnation section to the pre-lithiation section, wherein the pre-lithiation is carried out by alternately electrochemically charging the first negative electrode active material layer and the second negative electrode active material layer in the pre-lithiation section.

In pre-lithiating a negative electrode structure including a negative electrode active material layer on both sides in a roll-to-roll manner, when the negative electrode structure travels or moves on the roll-to-roll equipment, the phenomenon of the negative electrode structure shaking on the roll-to-roll equipment may occur due to the shaking of the roll-to-roll equipment, the shaking of an electrolyte in a pre-lithiation bath, and the like.

For example, when pre-lithiation is carried out by disposing two lithium metal counter electrodes so that the lithium metal electrodes are spaced apart from two negative electrode active material layers formed on two sides of the negative electrode structure and simultaneously electrochemically charging the two negative electrode active material layers, due to the phenomenon of the negative electrode structure shaking on roll-to-roll equipment, a difference in distances at which the lithium metal counter electrodes are spaced apart from the negative electrode active material layers arises. Such a difference in spacing distances causes low resistance to lithium ion migration on the side where a lithium metal counter electrode is relatively close to a negative electrode active material layer compared to the other side where a lithium metal counter electrode is relatively far from a negative electrode active material layer. Accordingly, since lithium ions are intercalated in such a manner that they are particularly concentrated in a negative electrode active material layer on the side where a lithium metal counter electrode is relatively close to the negative electrode active material layer, the pre-lithiation of the two negative electrode active material layers is not implemented in a balanced manner, the negative electrode structure is distorted, and the uniformity of negative electrode quality is reduced, and thus the initial efficiency and lifetime characteristics of a negative electrode are degraded.

In addition, when a negative electrode active material layer is formed on both sides of the negative electrode structure and one of the two negative electrode active material layers is first pre-lithiated and the other negative electrode active material layer is subsequently pre-lithiated, due to the volume expansion of the first pre-lithiated negative electrode active material layer and the deformation of a negative electrode, the other negative electrode active material layer cannot be uniformly and stably pre-lithiated, which exacerbates the problem of the two negative electrode active material layers being pre-lithiated in an unbalanced manner.

In order to solve this problem, the method of manufacturing a negative electrode of the present invention is characterized in that when a negative electrode structure including a negative electrode active material layer on both sides is pre-lithiated in a roll-to-roll manner, the pre-lithiation is carried out by alternately electrochemically charging the negative electrode active material layers. In the present specification, the expression "alternately electrochemically charged" may mean that two negative electrode active material layers are repeatedly electrochemically charged in a sequential manner. When the method of manufacturing a negative electrode of the present invention is used, since two negative electrode active material layers are alternately electrochemically charged, the imbalance problem occurring due to a difference in the amount of lithium ion intercalation into each of the two negative electrode active material layers during the pre-lithiation process can be resolved, and finally, the two negative electrode active material layers are pre-lithiated to the same extent, and uniform and stable pre-lithiation is possible. For example, while one negative electrode active material layer is being electrochemically charged, the other negative electrode active material layer is not electrochemically charged, and accordingly, the problem of pre-lithiation being implemented in an unbalanced manner due to a difference in spacing distances between the lithium metal counter electrodes and the two negative electrode active material layers and a difference in resistance to lithium ion migration can be resolved, and the problem of lithium ions being intercalated in such a manner that they are particularly concentrated in one of the negative electrode active material layers can be prevented. Therefore, a negative electrode manufactured using the method of manufacturing a negative electrode of the present invention has more uniform quality and improved initial efficiency and lifetime characteristics.

Hereinafter, the method of manufacturing a negative electrode of the present invention will be described in detail with reference to drawings. In giving reference numerals to components of each drawing, the same components may have the same numerals as much as possible even when they are shown in different drawings. In addition, in describing the present invention, when it is determined that a detailed description of a related known configuration or function may obscure the gist of the present invention, the detailed description may be omitted.

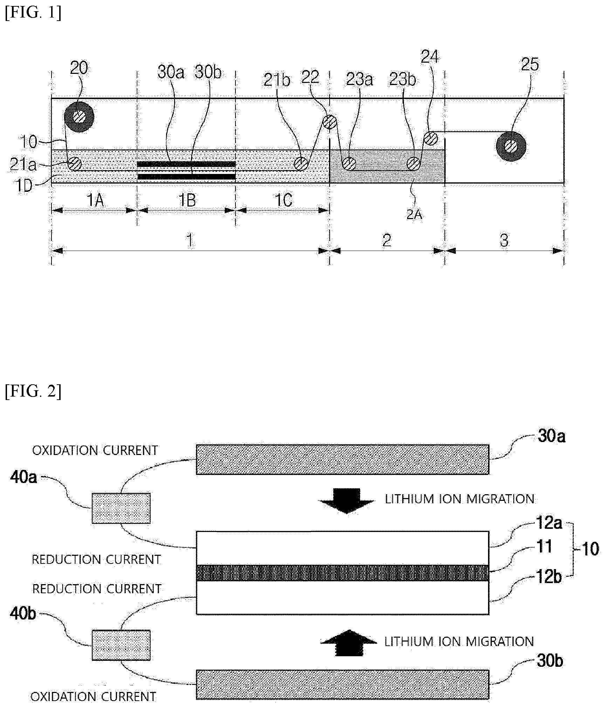

FIGS. 1 and 2 are diagrams for schematically illustrating a method of manufacturing a negative electrode of the present invention. Specifically, FIG. 1 is a diagram for schematically illustrating the impregnation of a negative electrode structure with an electrolyte, pre-lithiation, and the like which are carried out in a roll-to-roll manner in the method of manufacturing a negative electrode of the present invention. FIG. 2 is a diagram for schematically illustrating the alternate electrochemical charging of two negative electrode active material layers formed on two sides of a negative electrode structure in the method of manufacturing a negative electrode of the present invention.

<Preparation of negative electrode roll>

The method of manufacturing a negative electrode of the present invention includes providing a negative electrode roll 20 on which a negative electrode structure 10 including a negative electrode current collector 11, a first negative electrode active material layer 12a formed on one side of the negative electrode current collector 11, and a second negative electrode active material layer 12b formed on the other side of the negative electrode current collector 11 is wound.

In the method of manufacturing a negative electrode of the present invention, the negative electrode structure 10 is unwound from the negative electrode roll 20 on which the negative electrode structure 10 has been wound, and the negative electrode structure 10 enters a pre-lithiation bath 1 to be described below and moves and travels to carry out a pre-lithiation process. That is, in the method of manufacturing a negative electrode of the present invention, a negative electrode is manufactured in a roll-to-roll manner, and since impregnation with an electrolyte, pre-lithiation, aging, and the like can be carried out in series while the negative electrode structure 10 travels, processability can be improved, and the uniformity of product quality can be improved.

The negative electrode structure 10 is wound on the negative electrode roll 20, and the negative electrode structure 10 includes the negative electrode current collector 11, the first negative electrode active material layer 12a formed on one side of the negative electrode current collector 11, and the second negative electrode active material layer 12b formed on the other side of the negative electrode current collector 11.

The negative electrode roll 20 is a member on which the negative electrode structure 10 can be wound and from which the negative electrode structure can be unwound, and any roll commonly used in a roll-to-roll process may be used without limitation.

The negative electrode current collector is not particularly limited as long as it does not cause a chemical change in a battery and has high conductivity. Specifically, as the negative electrode current collector, copper, stainless steel, aluminum, nickel, titanium, calcined carbon, copper or stainless steel whose surface has been treated with carbon, nickel, titanium, silver, or the like, an aluminum-cadmium alloy, or the like may be used.

The negative electrode current collector 11 may typically have a thickness of 3 to 500 $\mu$m.

The negative electrode current collector 11 may have fine irregularities formed in a surface thereof to increase the adhesion of a negative electrode active material. For example, the negative electrode current collector may be used in any of various forms such as a film, a sheet, a foil, a net, a porous material, a foam, a non-woven fabric, and the like.

The negative electrode structure 10 includes negative electrode active material layers 12a, 12b formed on both sides of the negative electrode current collector 11.

The first negative electrode active material layer 12a is formed on one side of the negative electrode current collector 11, and the second negative electrode active material layer 12b is formed on the other side, that is, the opposite side, of the negative electrode current collector 11.

The first negative electrode active material layer 12a and the second negative electrode active material layer 12b may be the same or different. Preferably, for uniform pre-lithiation quality to be described below and a balance between the first negative electrode active material layer 12a and the second negative electrode active material layer 12b, the first negative electrode active material layer 12a and the second negative electrode active material layer 12b are the same.

The first negative electrode active material layer 12a may include a negative electrode active material.

The negative electrode active material may include one or more selected from among a carbon-based active material and a silicon-based active material.

The silicon-based active material may include a compound represented as $SiO_x$ ($0 \leq x < 2$). Since $SiO_2$ does not react with lithium ions and thus cannot store lithium, it is preferable that x satisfies the above range, and it is more preferable that the silicon-based active material includes SiO.

The silicon-based active material may have an average particle diameter (Dso) of 1 $\mu$m to 30 $\mu$m and preferably 2 $\mu$m to 15 $\mu$m in terms of ensuring structural stability during charging and discharging and reducing side reactions with an electrolyte.

The carbon-based active material may include one or more selected from the group consisting of artificial graphite, natural graphite, hard carbon, soft carbon, carbon black, graphene, and fibrous carbon and preferably includes one or more selected from the group consisting of artificial graphite and natural graphite.

The carbon-based active material may have an average particle diameter ($D_{50}$) of 10 $\mu$m to 30 $\mu$m and preferably 15 $\mu$m to 25 $\mu$m in terms of ensuring structural stability during charging and discharging and reducing side reactions with an electrolyte.

Specifically, the negative electrode active material may include both the silicon-based active material and the carbon-based active material in terms of improving both capacity characteristics and cycle characteristics. Specifically, the negative electrode active material may include the carbon-based active material and the silicon-based active material at a weight ratio of 50:50 to 95:5 and preferably 60:40 to 80:20, and it is preferable that the above range is satisfied so that both capacity characteristics and cycle characteristics can be improved.

The negative electrode active material may be included in an amount of 60% to 99% by weight and preferably 75% to 95% by weight in the first negative electrode active material layer 12a.

The first negative electrode active material layer 12a may include a binder and/or a conductive material in addition to the negative electrode active material.

The binder is used to improve battery performance by improving adhesion between the negative electrode active material layer and the negative electrode current collector, and may include, for example, one or more selected from the group consisting of a polyvinylidene fluoride-hexafluoropropylene (PVdF-co-HFP) copolymer, PVdF, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, a propylene polymer, polyacrylic acid, an ethylene-propylene-diene monomer (EPDM), a sulfonated-EPDM, styrene-butadiene rubber (SBR), and fluororubber, and various copolymers thereof.

The binder may be included in an amount of 0.5% to 10% by weight and preferably 1% to 5% by weight in the first negative electrode active material layer 12a.

The conductive material is not particularly limited as long as it does not cause a chemical change in a battery being produced and has conductivity, and, for example, graphite such as natural graphite or artificial graphite; carbon black such as acetylene black, Ketjen black, channel black, furnace black, lamp black, or thermal black; a conductive fiber such as carbon fiber or metal fiber; a conductive tube such as a carbon nanotube; fluorocarbon; a metal powder such as an aluminum powder or a nickel powder; a conductive whisker such as zinc oxide or potassium titanate; a conductive metal oxide such as titanium oxide; and a conductive material such as a polyphenylene derivative, may be used.

The conductive material may be included in an amount of 0.5% to 10% by weight and preferably 1% to 5% by weight in the first negative electrode active material layer 12a.

The thickness of the first negative electrode active material layer 12a may be in the range of 10$\mu$m to 100$\mu$m and preferably 50$\mu$m to 80$\mu$m.

The second negative electrode active material layer 12b may include a negative electrode active material. The type and content of the negative electrode active material and the like may be the same as those of the negative electrode active material described in regard to the first negative electrode active material layer 12a.

The second negative electrode active material layer 12b may include a binder and/or a conductive material in addition to the negative electrode active material. The types and contents of the binder and the conductive material and the like may be the same as those of the binder and the conductive material described for the first negative electrode active material layer 12a.

The thickness of the second negative electrode active material layer 12b may be in the range of 10 $\mu$m to 100 $\mu$m and preferably 50 $\mu$m to 80 $\mu$m.

The negative electrode structure may be prepared by applying a negative electrode slurry including the negative electrode active material, a binder, a conductive material, and/or a solvent for forming a negative electrode slurry on both sides of the negative electrode current collector, and drying and roll-pressing the resultant.

The solvent for forming a negative electrode slurry may include, for example, one or more selected from the group consisting of distilled water, ethanol, methanol, and isopropyl alcohol and preferably distilled water in terms of facilitating the dispersion of the negative electrode active material, the binder, and/or the conductive material.

<Preparation of pre-lithiation bath>

The method of manufacturing a negative electrode of the present invention includes preparing a pre-lithiation bath 1 including an impregnation section 1A and a pre-lithiation section 1B and containing a pre-lithiation solution ID, wherein the impregnation section 1A and the pre-lithiation section 1B are partitioned and sequentially provided.

The pre-lithiation bath 1 may be provided as a space in which the negative electrode structure 10 unwound from the negative electrode roll 20 travels so that impregnation with an electrolyte, pre-lithiation, and the like can be implemented.

The size and shape of the pre-lithiation bath 1 and the like may be appropriately designed in consideration of the impregnation and pre-lithiation of the negative electrode structure, a distance the negative electrode structure travels in the roll-to-roll process, and the like. Specifically, the ratio of the lengths of the impregnation section 1A and the pre-lithiation section 1B may be in the range of 1:1 to 10:1 and preferably 1.5:1 to 5:1 so that pre-lithiation can be smoothly performed. In the present specification, the lengths of the impregnation section 1A and the pre-lithiation section 1B may be based on the direction in which the negative electrode structure 10 moves or travels.

The pre-lithiation bath 1 contains the pre-lithiation solution ID. The pre-lithiation solution ID fills at least a part of the pre-lithiation bath 1, and the negative electrode structure 10 unwound from the negative electrode roll 20 is enters the pre-lithiation solution ID and travels or moves through the sections of the pre-lithiation bath 1.

The pre-lithiation solution ID may include a lithium salt and an organic solvent.

The organic solvent is not particularly limited as long as it can serve as a medium for an electrochemical reaction and ion migration, and specifically, the organic solvent may be: an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; a carbonate-based solvent such as dimethyl carbonate (DMC), diethyl carbonate (DEC), ethyl methyl carbonate (EMC), ethylene carbonate (EC), propylene carbonate (PC), or the like; an alcohol-based solvent such as ethyl alcohol, isopropyl alcohol, or the like; a nitrile such as R-CN (R is a C2-C20 hydrocarbon group with a linear, branched, or cyclic structure and may include a double-bonded aromatic ring or an ether linkage) or the like; an amide such as dimethylformamide or the like; dioxolane such as 1,3-dioxolane or the like; or sulfolane. Among these, a carbonate-based solvent is preferable in terms of improving electrochemical stability, and specifically, EMC, EC, or the like is more preferable.

The lithium salt may include one or more selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, and $LiB(C_2O_4)_2$ and preferably includes $LiPF_6$.

The lithium salt may be used at a concentration of 0.1 M to 3 M and preferably 0.5 M to 1.5 M based on the pre-lithiation solution, and it is preferable that the above range is satisfied so that the lithium salt can be sufficiently dissolved and thus lithium ions can be smoothly intercalated into an active material.

The pre-lithiation solution ID may additionally include one or more selected from the group consisting of fluoroethylene carbonate (FEC), vinylene carbonate (VC), polystyrene (PS), succinonitrile, ethylene glycol bis(propionitrile) ether, and lithium bis(fluorosulfonyl)imide (LiFSI) and preferably an additive including FEC in terms of stabilizing a surface of a negative electrode active material during pre-lithiation so that pre-lithiation can be smoothly achieved.

The additive may be included in the pre-lithiation solution in an amount of 0.1% to 15% and preferably 0.5% to 5% of the total weight of the pre-lithiation solution in terms of stabilizing a surface of a negative electrode active material so that pre-lithiation can be smoothly achieved.

The pre-lithiation bath 1 includes the impregnation section 1A and the pre-lithiation section 1B which are partitioned and sequentially provided. In the pre-lithiation bath 1, the impregnation section 1A and the pre-lithiation section 1B are not separated in a closed manner, and are abstractly partitioned according to locations of a negative electrode structure in the pre-lithiation bath or processes carried out at each location of the negative electrode structure. For example, as shown in FIG. 1, the impregnation section 1A and the pre-lithiation section 1B are abstractly partitioned with a dashed line in the pre-lithiation bath 1.

Since the pre-lithiation bath 1 contains the pre-lithiation solution ID, the impregnation section 1A and the pre-lithiation section 1B partitioned in the pre-lithiation bath 1 also contain the pre-lithiation solution ID.

In the pre-lithiation bath 1, one or more fixed rolls 21a, 21b may be provided so that the negative electrode structure 10 unwound from the negative electrode roll 20 can smoothly travel through the sections 1A, 1B. The fixed rolls 21a, 21b are fixedly disposed in the pre-lithiation bath 1, and the negative electrode structure 10 can travel through sections of the pre-lithiation bath 1 along a path formed by the fixed rolls 21a, 21b. Specifically, as shown in FIG. 1, the one or more fixed rolls 21a, 21b may be disposed at two ends of the pre-lithiation bath 1.

The sizes or lengths of the impregnation section 1A and the pre-lithiation section 1B may be appropriately designed in consideration of degrees to which the negative electrode structure 10 is to be impregnated with an electrolyte, pre-lithiated, and aged, and the like.

The temperature of the pre-lithiation bath 1 or of the pre-lithiation solution ID may be 10 °C to 80 °C, preferably 20 °C to 60 °C, and more preferably 25 °C to 40 °C, and when the above temperature range is satisfied, the pre-lithiation of a negative electrode and the diffusion of lithium ions into a negative electrode structure can be smoothly achieved.

<Impregnation of negative electrode structure>

The method of manufacturing a negative electrode of the present invention includes unwinding the negative electrode structure 10 from the negative electrode roll 20, moving the negative electrode structure 10 to the impregnation section 1A, and impregnating the negative electrode structure 10 with the pre-lithiation solution ID.

The negative electrode structure 10 unwound from the negative electrode roll 20 is introduced into the pre-lithiation bath 1 and moves or travels through the impregnation section 1A. Specifically, as shown in FIG. 1, the negative electrode structure 10 unwound from the negative electrode roll 20 may move or travel through the impregnation section 1A along the fixed rolls 21a, 21b.

While the negative electrode structure 10 moves through the impregnation section 1A, the negative electrode structure 10 is impregnated with an electrolyte due to the pre-lithiation solution ID in the impregnation section 1A. Since the negative electrode structure 10 is impregnated with an electrolyte as such, lithium ions can be more smoothly intercalated during the pre-lithiation of the negative electrode structure 10.

The time taken for the negative electrode structure 10 to move through the impregnation section 1A may be 1 to 10 times and more preferably 1.5 to 5 times the time taken for the negative electrode structure 10 to move through the pre-lithiation section 1B to be described below, and it is preferable that the above range is satisfied so that a more uniform passivation film can be formed and more uniform pre-lithiation is possible during the pre-lithiation to be described below.

<Pre-lithiation of negative electrode structure>

The method of manufacturing a negative electrode of the present invention includes pre-lithiating the negative electrode structure 10 by moving the same from the impregnation section 1A to the pre-lithiation section 1B.

The negative electrode structure 10 passes through the impregnation section 1A and enters the pre-lithiation section 1B. While the negative electrode structure 10 moves through the pre-lithiation section 1B, the pre-lithiation of the negative electrode structure 10 is performed and lithium ions are intercalated into a negative electrode active material layer or a negative electrode active material, and therefore, the irreversible capacity of the negative electrode active material is removed and a passivation film is formed.

The pre-lithiation may be performed while the negative electrode structure 10 moves or travels through the pre-lithiation section 1B.

The time taken for the negative electrode structure 10 to move through the pre-lithiation section 1B may be 5 minutes to 120 minutes, preferably 10 minutes to 90 minutes, and more preferably 15 minutes to 40 minutes, and it is preferable that the above range is satisfied so that more uniform pre-lithiation of a negative electrode active material is possible and the build-up of side-reaction products in a negative electrode due to excessive pre-lithiation can be prevented.

In the method of manufacturing a negative electrode of the present invention, the pre-lithiation is carried out by alternately electrochemically charging the first negative electrode active material layer 12a and the second negative electrode active material layer 12b. In the present specification, "alternately electrochemically charged" may mean that the first negative electrode active material layer and the second negative electrode active material layer are repeatedly electrochemically charged in a sequential manner. Specifically, according to the present invention, the first negative electrode active material layer is electrochemically charged and then the second negative electrode active material layer is electrochemically charged, and the first negative electrode active material layer may again be electrochemically charged after the electrochemical charging of the second negative electrode active material layer, and this process may be repeated.

In pre-lithiating a negative electrode structure including a negative electrode active material layer on both sides in a roll-to-roll manner, when the negative electrode structure moves or travels on the roll-to-roll equipment, the phenomenon of the negative electrode structure shaking on the roll-to-roll equipment may occur due to the shaking of the roll-to-roll equipment, the shaking of an electrolyte in a pre-lithiation bath, and the like.

For example, when pre-lithiation is carried out by disposing two lithium metal counter electrodes so that the lithium metal counter electrodes are spaced apart from two negative electrode active material layers in a negative electrode structure and electrochemically charging the two negative electrode active material layers simultaneously, due to the phenomenon of the negative electrode structure shaking on roll-to-roll equipment, a difference in distances at which the lithium metal counter electrodes are spaced apart from the negative electrode active material layers arises. Such a difference in spacing causes low resistance to lithium ion migration on the side where a lithium metal counter electrode is relatively close to a negative electrode active material layer compared to the other side where a lithium metal counter electrode is relatively far from a negative electrode active material layer, and accordingly, lithium ions may be intercalated in such a manner that they are particularly concentrated in a negative electrode active material layer on the side where a lithium metal counter electrode is relatively close to a negative electrode active material layer. Since this phenomenon causes the two negative electrode active material layers to be pre-lithiated in an unbalanced manner, the negative electrode structure is distorted, the uniformity of negative electrode quality is reduced, and thus the initial efficiency and lifetime characteristics of a negative electrode are degraded.

In addition, when a negative electrode active material layer is formed on both sides of the negative electrode structure and one of the two negative electrode active material layers is first pre-lithiated and the other negative electrode active material layer is subsequently pre-lithiated, due to the volume expansion of the first pre-lithiated negative electrode active material layer and the deformation of a negative electrode, the other negative electrode active material layer cannot be uniformly and stably pre-lithiated, which may exacerbate the problem of the two negative electrode active material layers being pre-lithiated in an unbalanced manner.

However, according to the method of manufacturing a negative electrode of the present invention, since the first negative electrode active material layer and the second negative electrode active material layer are alternately electrochemically charged, two negative electrode active material layers are pre-lithiated to the same extent, and uniform and stable pre-lithiation is possible.

Specifically, according to the present invention, for example, while the first negative electrode active material layer is being electrochemically charged, the second negative electrode active material layer is not electrochemically charged, and lithium ions in the pre-lithiation solution may move toward the first negative electrode active material layer due to the electrochemical charging and may be intercalated into the first negative electrode active material layer and not intercalated into the second negative electrode active material layer. When the second negative electrode active material layer is electrochemically charged, lithium ions in the pre-lithiation solution move toward the second negative electrode active material layer and are intercalated into the second negative electrode active material layer and are not intercalated into the first negative electrode active material layer. Therefore, according to the present invention, since a difference in resistance to lithium ion migration, which may be caused by a difference in distances at which lithium metal counter electrodes are spaced apart from the first and second negative electrode active material layers, does not occur, the problem of pre-lithiation being implemented in an unbalanced manner due to the difference in resistance to lithium ion migration may not occur.

In addition, for example, when only the first negative electrode active material layer is electrochemically charged, the distance between a lithium metal counter electrode and the first negative electrode active material layer may be changed due to the shaking of the negative electrode structure on the roll-to-roll equipment. However, according to the present invention, since electrons formed due to the oxidation of a lithium metal counter electrode or the like are transferred to a lithium salt in a pre-lithiation solution, thus causing lithium ions in the pre-lithiation solution present near the first negative electrode active material layer to be intercalated into the first negative electrode active material layer, even though the distance between the lithium metal counter electrode and the first negative electrode active material layer has changed, the amount of lithium ion intercalation can be adjusted to be the same.

Therefore, according to the present invention, non-uniform and unstable pre-lithiation caused due to the shaking of the negative electrode structure on the roll-to-roll equipment is prevented, and the imbalance problem arising due to a difference in the amount of lithium ion intercalation into the two negative active material layers can be resolved, and since the two negative active material layers formed on two sides of the negative electrode structure are equally uniformly pre-lithiated and the structural deformation of the negative electrode can thus be prevented, the uniformity of negative electrode quality can be significantly improved, and a negative electrode with improved initial efficiency and lifetime characteristics can be manufactured.

Specifically, as shown in FIG. 2, the pre-lithiation may be carried out by disposing a first lithium metal counter electrode 30a facing and spaced apart from the first negative electrode active material layer 12a and a second lithium metal counter electrode 30b facing and spaced apart from the second negative electrode active material layer 12b in the pre-lithiation section 1B, connecting the first negative electrode active material layer 12a and the first lithium metal counter electrode 30a through a first electrochemical charger/discharger 40a and the second negative electrode active material layer 12b and the second lithium metal counter electrode 30b through a second electrochemical charger/discharger 40b, and alternately operating the first electrochemical charger/discharger 40a and the second electrochemical charger/discharger 40b to alternately electrochemically charge the first negative electrode active material layer 12a and the second negative electrode active material layer 12b.

The first lithium metal counter electrode 30a may function as a counter electrode for the first negative electrode active material layer 12a, and the second lithium metal counter electrode 30b may function as a counter electrode for the second negative electrode active material layer 12b.

The first lithium metal counter electrode 30a and the second lithium metal counter electrode 30b are disposed in the pre-lithiation section 1B, and specifically, may be immersed in a pre-lithiation solution in the pre-lithiation section 1B.

The first lithium metal counter electrode 30a faces the first negative electrode active material layer 12a and is spaced apart from the first negative electrode active material layer 12a so that an electrode short circuit phenomenon caused due to making direct contact with the first negative electrode active material layer 12a during electrochemical charging can be prevented. In addition, similarly, the second lithium metal counter electrode 30b faces the second negative electrode active material layer 12b and is spaced apart from the second negative electrode active material layer 12b.

When it is intended to apply the conventional pre-lithiation method of bringing lithium metal into direct contact with a negative electrode structure to the roll-to-roll process, the negative electrode structure and the lithium metal should be wound together on the negative electrode roll. In this case, since the rate of lithium intercalation cannot be controlled and the negative active material may be damaged, there is a concern that the lifetime performance of the negative active material may be degraded. When a separate process of bringing lithium metal into contact with the negative electrode structure and pressing is carried out without winding the negative electrode structure and the lithium metal together on the negative electrode roll, since impregnation with an electrolyte, pre-lithiation, and aging cannot be carried out in series as in the present invention, the complexity of the process is greatly increased. However, in the method of manufacturing a negative electrode of the present invention, since pre-lithiation is carried out by an electrochemical charging method while using lithium metal spaced apart from the negative electrode structure as a counter electrode, unlike in the conventional pre-lithiation method of bringing lithium metal into direct contact with the negative electrode structure, the rate of lithium intercalation can be controlled, and the volume expansion or damage of the negative electrode active material due to excessive intercalation of lithium can be prevented.

The lengths of the first lithium metal counter electrode 30a and the second lithium metal counter electrode 30b may be the same as or different from the length of the pre-lithiation section 1B, and, for example, may be the same as the length of the pre-lithiation section 1B as shown in FIG. 1.

The first lithium metal counter electrode 30a may be spaced apart from the first negative electrode active material layer 12a by a distance of 1 mm to 30 mm and preferably 3 mm to 15 mm. The second lithium metal counter electrode 30b may be spaced apart from the second negative electrode active material layer 12b by a distance of 1 mm to 30 mm and preferably 3 mm to 15 mm. When the distances satisfy the above ranges, lithium can be smoothly intercalated into the negative electrode active material layers, and an electrode short circuit phenomenon that may occur due to excessively narrow spacing can be prevented.

The distance between the first lithium metal counter electrode 30a and the first negative electrode active material layer 12a and the distance between the second lithium metal counter electrode 30b and the second negative electrode active material layer 12b may be the same in terms of enabling uniform pre-lithiation.

As shown in FIG. 2, the first electrochemical charger/discharger 40a connects the first negative electrode active material layer 12a and the first lithium metal counter electrode 30a, and the second electrochemical charger/discharger 40b connects the second negative electrode active material layer 12b and the second lithium metal counter electrode 30b.

The first electrochemical charger/discharger 40a and the second electrochemical charger/discharger 40b may be alternately operated to alternately electrochemically charge the first negative electrode active material layer 12a and the second negative electrode active material layer 12b. Specifically, while the first electrochemical charger/discharger 40a is operated, the second electrochemical charger/discharger 40b may not be operated, and while the second electrochemical charger/discharger 40b is operated, the first electrochemical charger/discharger 40a may not be operated.

As shown in FIG. 2, the first electrochemical charger/discharger 40a provides an oxidation current to the first lithium metal counter electrode 30a and a reduction current to the first negative electrode active material layer 12a, and due to a resulting oxidation-reduction reaction, the first lithium metal counter electrode 30a may be oxidized, and lithium ions and electrons may be formed. Lithium ions formed from the first lithium metal counter electrode 30a may be intercalated into the first negative electrode active material layer 12a, or lithium ions formed due to the transfer of electrons formed from the first lithium metal counter electrode 30a to a lithium salt in the pre-lithiation solution ID may be intercalated into the first negative electrode active material layer 12a. As in the case of the first electrochemical charger/discharger 40a, lithium ions and electrons are formed in the second lithium metal counter electrode 30b due to the second electrochemical charger/discharger 40b, and accordingly, lithium ions derived from the second lithium metal counter electrode or the pre-lithiation solution can be intercalated into the second negative electrode active material layer 12b.

The pre-lithiation may be carried out with a current density of 0.2 mA/cm$^2$ to 10 mA/cm$^2$ and preferably 2 mA/cm$^2$ to 6 mA/cm$^2$, and when electrochemical charging is carried out with a current satisfying the above range, uniform and stable pre-lithiation of a negative electrode active material is possible.

In the pre-lithiation, the first negative electrode active material layer 12a and the second negative electrode active material layer 12b may be alternately electrochemically charged at regular periods.

In the pre-lithiation, when each of the first negative electrode active material layer 12a and the second negative electrode active material layer 12b being electrochemically charged once is designated as one cycle, the first negative electrode active material layer 12a and the second negative electrode active material layer 12b may be alternately electrochemically charged in the pre-lithiation section 1B in two or more cycles.

In the pre-lithiation, the first negative electrode active material layer 12a and the second negative electrode active material layer 12b may be alternately electrochemically charged for a period of 0.1 seconds to 80 seconds, preferably 0.5 seconds to 50 seconds, more preferably 0.8 seconds to 15 seconds, and even more preferably 3 seconds to 7 seconds. It is preferable that the above range is satisfied so that current can be stably supplied to the two negative electrode active material layers, the problem of resistance hindering the stable application of current, which occurs when the period is excessively short, can be resolved, and the problem of lithium ions being intercalated in such a manner that they are particularly concentrated in one of the negative electrode active material layers, which occurs when the period is excessively long, can be resolved.

In present specification, the term "period" may refer to a length of time from a time point at which a first electrochemical charging of the first negative electrode active material layer is completed (the same as a time point at which a first electrochemical charging of the second negative active material layer starts) to a time point at which a subsequent electrochemical charging of the first negative active material layer starts (the same as a time point at which the first electrochemical charging of the second negative active material layer is completed), or a length of time from a time point at which a first electrochemical charging of the second negative electrode active material layer is completed (the same as a time point at which a first electrochemical charging of the first negative active material layer starts) to a time point at which a subsequent electrochemical charging of the second negative active material layer starts (the same as a time point at which the first electrochemical charging of the first negative active material layer is completed).

In the pre-lithiation, the first negative electrode active material layer 12a and the second negative electrode active material layer 12b may each be independently electrochemically charged to 5% to 50% SoC and preferably 15% to 35% SoC. It is preferable that pre-lithiation is carried out by electrochemically charging to the above range so that a uniform and stable passivation film can be formed on a surface of the negative electrode structure and thus the reversible capacity of a battery can be improved and the cycle characteristics of the battery can thus be improved. In the present specification, a state-of-charge (SoC) means "remaining capacity of a negative electrode active material layer," and, for example, 100% SoC means that the negative electrode active material layer is fully charged, 0% SoC means that the negative electrode active material layer is fully discharged, and x% ($0 \leq x \leq 100$) SoC may mean that the negative electrode active material layer is charged to x% of 100% SoC. Specifically, the first negative electrode active material layer 12a and the second negative electrode active material layer 12b may be electrochemically charged to the same SoC.

<Aging of negative electrode structure>

In the method of manufacturing a negative electrode of the present invention, the pre-lithiation bath 1 may include an impregnation section 1A, a pre-lithiation section 1B, and an aging section 1C, which are partitioned and sequentially provided. That is, as shown in FIG. 1, the pre-lithiation bath may include, in addition to an impregnation section 1A and a pre-lithiation section 1B, an aging section 1C, which is partitioned.

The method of manufacturing a negative electrode of the present invention may additionally include aging the negative electrode structure 10 by moving the negative electrode structure 10 from the pre-lithiation section 1B to the aging section 1C.

While the negative electrode structure 10 moved from the pre-lithiation section 1B to the aging section 1C travels through the aging section 1C containing a pre-lithiation solution ID, lithium ions intercalated due to pre-lithiation can be more uniformly diffused on/in the surface and inside of a negative electrode active material, and the irreversible capacity of the negative electrode active material can be sufficiently removed.

In the pre-lithiation bath 1, the aging section 1C is not separated from the impregnation section 1A and the pre-lithiation section 1B in a closed manner, and may be abstractly partitioned according to locations of a negative electrode structure in the pre-lithiation bath 1 or processes carried out at each location of the negative electrode structure.

Since the pre-lithiation bath 1 contains the pre-lithiation solution ID, the aging section 1C partitioned in the pre-lithiation bath 1 also contains the pre-lithiation solution ID. The composition of the pre-lithiation solution and the like have been described above.

The aging section 1C may include one or more fixed rolls so that the negative electrode structure unwound from the negative electrode roll 20 can smoothly travel.

The time taken for the negative electrode structure 10 to move through the aging section 1C may be 0.5 to 21 times and preferably 1.8 to 10 times the time taken for the negative electrode structure 10 to move through the pre-lithiation section 1B, and it is preferable that the above range is satisfied so that lithium ions can be more uniformly diffused into a negative electrode active material, and when the above range is satisfied, the phenomenon of a negative active material layer being separated from a current collector due to excessive aging or resistance increasing due to the thickening of a film on a surface of a negative electrode can be prevented.

The ratio of the lengths of the pre-lithiation section and the aging section may be in the range of 0.5:1 to 21:1 and preferably 1.8:1 to 10:1.

<Washing of negative electrode structure>

The method of manufacturing a negative electrode of the present invention may additionally include taking the pre-lithiated negative electrode structure 10 out of the pre-lithiation bath 1, moving the pre-lithiated negative electrode structure to a washing bath 2 containing an organic solvent 2A, and washing the same.

The negative electrode structure 10 may be transferred from the pre-lithiation bath 1 to the washing bath 2 after passing through the pre-lithiation section 1B, or it may be transferred from the pre-lithiation bath 1 to the washing bath 2 after passing through the aging section 1C.

The method of manufacturing a negative electrode of the present invention may additionally include a process of washing the negative electrode structure 10 after the pre-lithiation of the negative electrode structure 10 or after the pre-lithiation and aging of the negative electrode structure 10 so that impurities remaining in the negative electrode structure can be removed.

Specifically, the washing process may be carried out by taking the negative electrode structure 10 out of the pre-lithiation bath 1 using a fixed roll 22 disposed between the pre-lithiation bath 1 and the washing bath 2 and then introducing the negative electrode structure 10 into the washing bath 2, and the negative electrode structure 10 is washed while traveling through the washing bath 2. The negative electrode structure 10 may travel through the washing bath 2 by separately provided fixed rolls 23a, 23b.

The washing bath 2 contains an organic solvent 2A, and specifically, the washing bath 2 contains an organic solvent but may not contain a lithium salt. The washing process is carried out by moving the negative electrode structure through the organic solvent that does not contain a lithium salt. As the organic solvent, an organic solvent listed in the description of the pre-lithiation solution may be used.

The time taken for the negative electrode structure 10 to movethrough the washing bath 2 may be 0.1 to 5 times and more preferably 0.5 to 2 times the time taken for the negative electrode structure 10 to move through the pre-lithiation section 1B, and when the above range is satisfied, impurities remaining in the negative electrode structure can be smoothly removed.

The method of manufacturing a negative electrode of the present invention may additionally include drying the washed negative electrode structure 10.

By the drying process, the organic solvent remaining in the negative electrode structure due to the impregnation, pre-lithiation, aging, and/or washing process(es) can be removed.

Specifically, the drying process may be carried out by taking the washed negative electrode structure 10 out of the washing bath 2 and moving the same to a drying unit 3, which is separately provided. A fixed roll 24 may be disposed between the washing bath 2 and the drying unit 3, and the negative electrode structure 10 may move or travel through the drying unit 3 by the fixed roll 24.

The drying process may be carried out using air or an inert gas. The inert gas may be one or more selected from the group consisting of Ar, $N_2$, and He.

The drying process may be carried out at a temperature of 10 °C to 80 °C and preferably 20 °C to 60 °C, and it is preferable that the above range is satisfied in terms of preventing the oxidation of the negative electrode structure and maintaining a pre-lithiated state.

The time taken for the washed negative electrode structure 10 to dry may be 0.1 to 5 times and preferably 0.5 to 2 times the time taken for the negative electrode structure 10 to move through the pre-lithiation section, and it is preferable that the above range is satisfied so that the organic solvent remaining in the negative electrode structure can be smoothly removed and the risk of the negative electrode structure being damaged due to the organic solvent remaining in the negative electrode structure for a long time can be prevented.

A collecting roll 25 may be installed in the drying unit 3, and the negative electrode structure 10 traveling through the drying unit 3 may be wound on the collecting roll 25.

The method of manufacturing a negative electrode of the present invention may additionally include unwinding the negative electrode structure 10 from the collecting roll 25, cutting the same, and thus obtaining a negative electrode.

The negative electrode may be assembled together with a positive electrode, a separator, an electrolyte, and the like as will be described below, and thereby a secondary battery, specifically, a lithium secondary battery, is manufactured.

The negative electrode manufactured by the above-described manufacturing method may have improved reversibility and initial efficiency, and since two negative electrode active material layers formed on both sides thereof are uniformly pre-lithiated, the negative electrode may have more uniform quality. Therefore, the negative electrode manufactured by the manufacturing method of the present invention can be desirably applied to a secondary battery, specifically, a lithium secondary battery.

In addition, according to the above-described manufacturing method, since the impregnation of the negative electrode structure with an electrolyte, pre-lithiation, and additional aging, washing, and/or drying can be carried out in series by a roll-to-roll method, the efficiency of a negative electrode manufacturing process can be improved, and the uniformity of negative electrode quality can be improved to an excellent level.

The above-described secondary battery may include: a negative electrode manufactured by the above-described manufacturing method; a positive electrode opposite to the negative electrode; a separator interposed between the negative electrode and the positive electrode; and an electrolyte. The negative electrode has been described above, and as the positive electrode, the separator, and the electrolyte, those used in conventional lithium secondary batteries may be used.

The secondary battery is useful in the field of portable devices such as mobile phones, laptop computers, and digital cameras and electric vehicles such as hybrid electric vehicles (HEVs).

In addition, the secondary battery is applicable to a battery module including the secondary battery as a unit cell or a battery pack including the same.

The battery module or the battery pack is applicable as a power source for one or more medium-to-large sized devices selected from among power tools, electric vehicles (EVs), including HEVs and plug-in hybrid electric vehicles (PHEVs), and power storage systems.

Hereinafter, exemplary embodiments of the present invention will be described in detail so that those of ordinary skill in the art can easily implement the present invention. However, the present invention may be implemented in various different forms and is not limited to the embodiments described herein.

## Examples

### Example 1: Manufacture of negative electrode

<Preparation of negative electrode structure>

As a negative electrode active material, a 70:30 (w/w) mixture of natural graphite (average particle diameter ($D_{50}$): 20 $\mu$m) and SiO (average particle diameter ($D_{50}$): 5 $\mu$m) was provided.

A negative electrode slurry was prepared by mixing the negative electrode active material, Denka Black as a conductive material, SBR as a binder, and CMC as a thickener in a weight ratio of 92:3:3.5: 1.

The negative electrode slurry was applied on both sides of a copper current collector (thickness: 8 $\mu$m) as a negative electrode current collector, roll-pressed, and dried in a 130 °C vacuum oven for 12 hours. Through this, a negative electrode structure including a first negative electrode active material layer (thickness: 70 $\mu$m) and a second negative electrode active material layer (thickness: 70 $\mu$m) formed on both sides of the negative electrode current collector was obtained.

The negative electrode structure was wound on a negative electrode roll made of stainless steel and having a diameter of 3 inches.

<Preparation of pre-lithiation bath>

A stainless steel pre-lithiation bath having dimensions of 100 cm (width)×20 cm (length)×50 cm (height) was provided. In the pre-lithiation bath, a pre-lithiation solution was added to 20% of the height of the pre-lithiation bath. The temperature of the pre-lithiation bath was maintained at 25 °C.

As the pre-lithiation solution, a solution prepared by adding, to an organic solvent in which EC and EMC were mixed in a volume ratio of 30:70, $LiPF_6$ as a lithium salt at a concentration of 1 M and FEC as an additive in an amount of 2% by weight based on the total weight of the pre-lithiation solution was used.

The pre-lithiation bath was partitioned into an impregnation section, a pre-lithiation section, and an aging section. In the impregnation section, the pre-lithiation section, and the aging section, a plurality of fixed rolls were installed so that the negative electrode structure could smoothly travel.

In the pre-lithiation section, a first lithium metal counter electrode (thickness: 150 $\mu$m) and a second lithium metal counter electrode (thickness: 150 $\mu$m) were installed to be spaced apart from a path through which the negative electrode structure was to travel. The first lithium metal counter electrode was installed to be spaced 6 mm apart from the first negative electrode active material layer, and the second lithium metal counter electrode was installed to be spaced 6 mm apart from the second negative electrode active material layer.

In addition, the pre-lithiation bath was partitioned so that the lengths of the impregnation section, the pre-lithiation section, and the aging section were in a ratio of 2:1:2.

<Immersion, pre-lithiation, and aging>

1. Immersion of negative electrode structure

The negative electrode structure was unwound from the negative electrode roll and entered and traveled through the pre-lithiation bath at a speed of 1 cm/min.

The unwound negative electrode structure entered the impregnation section and moved and traveled through the impregnation section for 40 minutes, and then was impregnated with the pre-lithiation solution.

2. Pre-lithiation of negative electrode structure

The negative electrode structure having passed through the impregnation section was introduced into the pre-lithiation section and moved through the pre-lithiation section for 20 minutes, and was subjected to pre-lithiation.

Specifically, the first negative electrode active material layer and the first lithium metal counter electrode were connected through a first electrochemical charger/discharger (device name: WBCS3000, manufacturer: WonATech Co., Ltd.). In addition, the second negative electrode active material layer and the second lithium metal counter electrode were connected through a second electrochemical charger/discharger (device name: WBCS3000, manufacturer: Won-ATech Co., Ltd.).

The first electrochemical charger/discharger and the second electrochemical charger/discharger were alternately operated for a period of five seconds. Specifically, while the first electrochemical charger/discharger was operated for five seconds, the power of the second electrochemical charger/discharger was turned off, and while the second electrochemical charger/discharger was operated for five seconds, the power of the first electrochemical charger/discharger was turned off.

As a result of operating the first and second electrochemical charger/dischargers, both the first negative electrode active material layer and the second negative electrode active material layer were electrochemically charged to 18.5% SoC at a current density of 4.68 mA/cm$^2$ and thus were pre-lithiated.

The negative electrode structure passed through the pre-lithiation section was introduced, from the pre-lithiation section, into the aging section, and in the aging section, the negative electrode structure was aged while moving or traveling for 40 minutes.

<Washing and drying>

A stainless steel washing bath having dimensions of 20 cm (width)×20 cm (length)×50 cm (height) was provided. Between the pre-lithiation bath and the washing bath, a fixed roll was installed. In the washing bath, DMC, which is an organic solvent, was contained at 20% of the height of the washing bath.

The negative electrode structure was taken out of the pre-lithiation bath by the fixed roll, and entered and traveled through the washing bath.

The time taken for the negative electrode structure to move or travel through the washing bath was 20 minutes.

A stainless steel drying unit having dimensions of 20 cm (width)×20 cm (length)×50 cm (height) was provided. The temperature of the drying unit was 25 °C, and the drying unit was filled with air. Between the washing bath and the drying unit, a fixed roll was installed. In the drying unit, a collecting roll was installed.

The washed negative electrode structure was moved to the drying unit by the fixed roll and traveled through the drying unit for 20 minutes.

The negative electrode structure having traveled through the drying unit was wound on the collecting roll.

**Example 2: Manufacture of negative electrode**

In Example 2, a negative electrode was manufactured in the same manner as in Example 1 except that the first electrochemical charger/discharger and the second electrochemical charger/discharger were alternately operated for a period of one second.

**Example 3: Manufacture of negative electrode**

In Example 3, a negative electrode was manufactured in the same manner as in Example 1 except that the first electrochemical charger/discharger and the second electrochemical charger/discharger were alternately operated for a period of 10 seconds.

**Example 4: Manufacture of negative electrode**

In Example 4, a negative electrode was manufactured in the same manner as in Example 1 except that the first electrochemical charger/discharger and the second electrochemical charger/discharger were alternately operated for a period of 70 seconds.

**Comparative Example 1: Manufacture of negative electrode**

In Comparative Example 1, a negative electrode was manufactured in the same manner as in Example 1 except that, for pre-lithiation, a first negative electrode active material layer and a second negative electrode active material layer were connected through one electrochemical charger/discharger, the first negative electrode active material layer and the second negative electrode active material layer were electrochemically charged simultaneously rather than alternately, and during electrochemical charging, a current density was set to 9.36 mA/cm$^2$.

**Comparative Example 2: Manufacture of negative electrode**

In Comparative Example 2, a negative electrode was manufactured in the same manner as in Example 1 except that, for pre-lithiation, a first negative electrode active material layer and a second negative electrode active material layer were not alternately charged, wherein the first negative electrode active material layer was electrochemically charged to 18.5% SoC, and subsequently, the second negative electrode active material layer was electrochemically charged to 18.5% SoC.

**Experimental Examples**

**Experimental Example 1: Evaluation of initial efficiency**

<Manufacture of coin-type half cell>

The negative electrode of Example 1 unwound from the collecting roll was punched into a size of 7 cm×7 cm, which was divided to obtain two negative electrodes. From one of the negative electrodes, a second negative electrode active material layer was removed by washing, and from the other negative electrode, a first negative electrode active material layer was removed by washing. The negative electrode, from which the second negative electrode active material layer was removed, was punched into a size of a coin cell, a polyolefin separator was interposed between the first negative electrode active material layer and the lithium metal counter electrode, and an electrolyte was injected, and thereby a coin-type half-cell secondary battery (Example 1-A) was manufactured. In addition, the negative electrode, from which the first negative electrode active material layer was removed, was punched into a size of a coin cell, a polyolefin separator was interposed between the second negative electrode active material layer and the lithium metal counter electrode, and an electrolyte was injected, and thereby a coin-type half-cell secondary battery (Example 1-B) was manufactured.

In addition, the negative electrode unwound from the collecting roll was punched at various locations to manufacture three samples of each of Examples 1-A and 1-B in the same manner as described above.

In addition, using the negative electrodes of Examples 2, 3, and 4 and Comparative Examples 1 and 2, coin-type half cell secondary batteries Examples 2-A and 2-B, Examples 3-A and 3-B, Examples 4-A and 4-B, Comparative Examples 1-A and 1-B, and Comparative Examples 2-A and 2-B, respectively, were manufactured in the same manner as described above.

<Testing of initial reversibility>

The initial reversibilitites of the coin-type half cells manufactured in the above were tested using an electrochemical charger/discharger. Charging was carried out to a voltage of 0.005 V (*vs.* Li/Li$^+$) by applying current at a rate of 0.1 C, and discharging was carried out to 1.5 V with the same current. In this case, initial efficiency was measured and calculated as a ratio (%) of discharge capacity with respect to charge capacity, and the results are shown in Table 1.

Through this, the initial efficiency of each of the first negative electrode active material layers and the second negative electrode active material layers included in the negative electrodes can be calculated. For example, by measuring the initial efficiency using the coin-type half cells Examples 1-A and 1-B, the initial efficiency of each of the first negative electrode active material layer and the second negative electrode active material layer in the negative electrode of Example 1 can be evaluated.

[Table 1]

|  |  | Initial efficiency (%) | | |
|---|---|---|---|---|
|  |  | Sample 1 | Sample 2 | Sample 3 |
| Example 1 | Example 1-A | 99 | 99 | 99 |
|  | Example 1-B | 99 | 99 | 99 |
| Example 2 | Example 2-A | 98 | 99 | 99 |
|  | Example 2-B | 99 | 98 | 99 |
| Example 3 | Example 3-A | 98 | 98 | 97 |
|  | Example 3-B | 98 | 97 | 98 |

(continued)

|  |  | Initial efficiency (%) | | |
|---|---|---|---|---|
|  |  | Sample 1 | Sample 2 | Sample 3 |
| Example 4 | Example 4-A | 102 | 94 | 98 |
|  | Example 4-B | 95 | 103 | 99 |
| Comparative Example 1 | Comparative Example 1-A | 113 | 85 | 105 |
|  | Comparative Example 1-B | 85 | 113 | 89 |
| Comparative Example 2 | Comparative Example 2-A | 110 | 86 | 106 |
|  | Comparative Example 2-B | 87 | 111 | 88 |

Referring to Table 1, in the case of Examples 1 to 4, it can be seen that the initial efficiencies of the first negative electrode active material layer and the second negative electrode active material layer formed in the negative electrodes were the same or similar and, at the same time, excellent.

However, as in the case of Comparative Example 1, when the first negative electrode active material layer and the second negative electrode active material layer were simultaneously electrochemically charged, due to the slight shaking of the roll-to-roll equipment and the like, the spacing between the first lithium metal counter electrode and the first negative electrode active material layer and the spacing between the second lithium metal counter electrode and the second negative electrode active material layer became different. When there was a difference in spacing as such, since lithium ions were intercalated in such a manner that they were particularly concentrated in the negative electrode active material layer that was relatively close to a lithium metal counter electrode, pre-lithiation was implemented in an unbalanced manner, and in the case of Comparative Example 1, the first negative electrode active material layer and the second negative electrode active material layer had different initial efficiencies.

In addition, as in the case of Comparative Example 2, when the first negative electrode active material layer was first pre-lithiated and then the second negative electrode active material layer was pre-lithiated, the electrode was distorted due to the electrochemical charging of the first negative electrode active material layer, and since the second negative electrode active material layer was electrochemically charged while the electrode was distorted, pre-lithiation was not smoothly achieved. Therefore, in the case of Comparative Example 2, pre-lithiation was implemented in an unbalanced manner, and the first negative electrode active material layer and the second negative electrode active material layer had different initial efficiencies.

**Experimental Example 2: Evaluation of capacity retention rate**

**<Manufacture of lithium secondary battery>**

The negative electrodes manufactured in Examples 1 to 4 and Comparative Examples 1 and 2 were cut to a size of 3 cm×4 cm.

A positive electrode slurry prepared by mixing $LiNi_{0.8}Co_{0.1}Mn_{0.1}O_2$ as a positive electrode active material, Super C as a conductive material, and PVdF as a binder at a weight ratio of 97:1.5:1.5 was applied on one side of an aluminum current collector, roll-pressed, and dried at 130 °C, and thus a positive electrode was obtained. Two such positive electrodes were prepared.

A polypropylene separator was interposed between one of the negative electrode manufactured in Examples 1 to 4 and Comparative Examples 1 and 2 and a positive electrode manufactured as described above, and an electrolyte was injected, and thereby a lithium secondary battery was manufactured. As the electrolyte, a solution prepared by adding, to an organic solvent in which EC and EMC were mixed in a volume ratio of 30:70, $LiPF_6$ as a lithium salt at a concentration of 1 M and FEC as an additive in an amount of 2% by weight based on the total weight of the pre-lithiation solution was used.

**<Evaluation of capacity retention rate>**

The discharge capacities and capacity retention rates of the lithium secondary batteries manufactured in Examples and Comparative Examples were evaluated using an electrochemical charger/discharger. Charging was carried out to a voltage of 4.2 V by applying current at a current density of 0.1 C-rate, and discharging was carried out to a voltage of 2.5 V with the same current density.

The capacity retention rate was evaluated by measuring the discharge capacities of the lithium secondary batteries of Examples and Comparative Examples at the 1$^{st}$ and 100$^{th}$ cycles and calculated by Mathematical Formula 1 below. The results are shown in Table 1 below.

[Mathematical Formula 1]

Capacity retention rate (%) = (Discharge capacity at 100$^{th}$ cycle) / (Discharge capacity at 1$^{st}$ cycle) × 100

[Table 2]

|  | Capacity retention rate (%) at 100$^{th}$ cycle |
|---|---|
| Example 1 | 95 |
| Example 2 | 93 |
| Example 3 | 92 |
| Example 4 | 87 |
| Comparative Example 1 | 78 |
| Comparative Example 2 | 75 |

Referring to Table 2, it can be seen that, in the case of the secondary batteries of Examples 1 to 4, since the first negative electrode active material layers and the second negative electrode active material layers formed in the negative electrodes can be pre-lithiated to the same extent, even when charging and discharging is performed, the volumes of the first and second negative electrode active material layers expand/contract to the same extent, and since the risk of occurrence of negative electrode distortion is accordingly reduced, lifetime performance can be significantly improved.

On the other hand, it can be seen that, in the case of Comparative Examples 1 and 2, since the first and second negative electrode active material layers cannot be pre-lithiated to the same extent, the risk of occurrence of negative electrode distortion is increased due to charging or discharging, and since the contact between the negative electrode active materials is accordingly reduced, lifetime characteristics are significantly degraded.

[Description of Reference Numerals]

1: pre-lithiation bath
1A: impregnation section
1B: pre-lithiation section
1C: aging section
ID: pre-lithiation solution
2: washing bath
2A: organic solvent
3: drying unit
10: negative electrode structure
11: negative electrode current collector
12a: first negative electrode active material layer
12b: second negative electrode active material layer
20: negative electrode roll
21a, 21b, 22, 23a, 23b, 24: fixed roll
25: collecting roll
30a: first lithium metal counter electrode
30b: second lithium metal counter electrode

40a: first electrochemical charger/discharger
40b: second electrochemical charger/discharger

**Claims**

1. A method of manufacturing a negative electrode, comprising:

   providing a negative electrode roll on which a negative electrode structure including a negative electrode current collector, a first negative electrode active material layer formed on one side of the negative electrode current collector, and a second negative electrode active material layer formed on the other side of the negative electrode current collector is wound;
   preparing a pre-lithiation bath including an impregnation section and a pre-lithiation section and containing a pre-lithiation solution, wherein the impregnation section and the pre-lithiation section are partitioned and sequentially provided;
   unwinding the negative electrode structure from the negative electrode roll, and moving the negative electrode structure to the impregnation section and impregnating the negative electrode structure with the pre-lithiation solution; and
   pre-lithiating the negative electrode structure by moving the same from the impregnation section to the pre-lithiation section,
   wherein the pre-lithiating of the negative electrode structure is carried out by alternately electrochemically charging the first negative electrode active material layer and the second negative electrode active material layer in the pre-lithiation section.

2. The method of claim 1, wherein the pre-lithiating of the negative electrode structure is carried out by:

   disposing a first lithium metal counter electrode facing and spaced apart from the first negative electrode active material layer and a second lithium metal counter electrode facing and spaced apart from the second negative electrode active material layer in the pre-lithiation section;
   connecting the first negative electrode active material layer and the first lithium metal counter electrode through a first electrochemical charger/discharger and connecting the second negative electrode active material layer and the second lithium metal counter electrode through a second electrochemical charger/discharger; and
   alternately operating the first electrochemical charger/discharger and the second electrochemical charger/discharger to alternately electrochemically charge the first negative electrode active material layer and the second negative electrode active material layer.

3. The method of claim 1, wherein the pre-lithiating of the negative electrode structure is carried out by alternately electrochemically charging the first negative electrode active material layer and the second negative electrode active material layer in two or more cycles in the pre-lithiation section, wherein, in each cycle, the first negative electrode active material layer and the second negative electrode active material layer is electrochemically charged once.

4. The method of claim 1, wherein the first negative electrode active material layer and the second negative electrode active material layer are alternately electrochemically charged for a period of 0.1 seconds to 80 seconds.

5. The method of claim 1, wherein the electrochemically charging is carried out using a current of 0.2 mA/cm$^2$ to 10 mA/cm$^2$.

6. The method of claim 1, wherein the negative electrode structure moves through the pre-lithiation section in 5 minutes to 120 minutes.

7. The method of claim 1, wherein a time taken for the negative electrode structure to move through the impregnation section is 1 to 10 times a time taken for the negative electrode structure to move through the pre-lithiation section.

8. The method of claim 1, wherein the pre-lithiation bath includes the impregnation section, the pre-lithiation section, and an aging section which are partitioned and sequentially provided, and
   wherein the method further includes aging the negative electrode structure by moving the negative electrode structure from the pre-lithiation section to the aging section.

9. The method of claim 8, wherein a time taken for the negative electrode structure to move through the aging section is 0.5 to 21 times a time taken for the negative electrode structure to move through the pre-lithiation section.

10. The method of claim 1, further comprising:

moving the pre-lithiated negative electrode structure out of the pre-lithiation bath; and
moving the pre-lithiated negative electrode structure to a washing bath containing an organic solvent and washing the pre-lithiated negative electrode structure.

11. The method of claim 10, wherein a time taken for the pre-lithiated negative electrode structure to move through the washing bath is 0.1 to 5 times a time taken for the negative electrode structure to move through the pre-lithiation section.

12. The method of claim 10, further comprising drying the washed negative electrode structure.

13. The method of claim 1, wherein a temperature inside the pre-lithiation bath is in a range of 10 °C to 80 °C.

14. The method of claim 1, wherein each of the first negative electrode active material layer and the second negative electrode active material layer includes a negative electrode active material, and
wherein the negative electrode active material includes one or more selected from among a carbon-based active material and a silicon-based active material.

15. The method of claim 1, wherein, in the pre-lithiating of the negative electrode structure, the first negative electrode active material layer and the second negative electrode active material layer are each independently electrochemically charged to a state-of-charge (SoC) of 5% to 50%.

[FIG. 1]

[FIG. 2]

OXIDATION CURRENT — 30a

40a

LITHIUM ION MIGRATION

12a
11 } 10
12b

REDUCTION CURRENT
REDUCTION CURRENT

40b

LITHIUM ION MIGRATION

30b

OXIDATION CURRENT

| INTERNATIONAL SEARCH REPORT | International application No. |
|---|---|
| | **PCT/KR2021/003552** |

**A.  CLASSIFICATION OF SUBJECT MATTER**

**H01M 4/1395**(2010.01)i; **H01M 4/1391**(2010.01)i; **H01M 4/1393**(2010.01)i; **H01M 4/04**(2006.01)i; **H01M 10/052**(2010.01)i; **H01M 4/02**(2006.01)i

According to International Patent Classification (IPC) or to both national classification and IPC

**B.  FIELDS SEARCHED**

Minimum documentation searched (classification system followed by classification symbols)

H01M 4/1395(2010.01); H01M 10/0525(2010.01); H01M 10/058(2010.01); H01M 10/40(2006.01); H01M 4/04(2006.01); H01M 4/139(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전리튬화 (prelithiation), 교대 (alternation), 음극 (anode), 충전 (charging), 함침 (immerse)

**C.  DOCUMENTS CONSIDERED TO BE RELEVANT**

| Category* | Citation of document, with indication, where appropriate, of the relevant passages | Relevant to claim No. |
|---|---|---|
| A | CN 109103496 A (SHANGHAI INSTITUTE OF SPACE POWER-SOURCES) 28 December 2018 (2018-12-28)<br>See paragraphs [0046]-[0050]; and figure 2. | 1-15 |
| A | KR 10-2014-0106645 A (NANOSCALE COMPONENTS, INC.) 03 September 2014 (2014-09-03)<br>See entire document. | 1-15 |
| A | JP 10-83835 A (FUJI ELELCTROCHEM CO., LTD.) 31 March 1998 (1998-03-31)<br>See entire document. | 1-15 |
| A | JP 09-22690 A (GENERAL MOTORS CORPORATION) 21 January 1997 (1997-01-21)<br>See entire document. | 1-15 |
| A | US 5595837 A (OLSEN, I. I. et al.) 21 January 1997 (1997-01-21)<br>See entire document. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 July 2021** | **01 July 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/003552**

| Patent document cited in search report | | | Publication date (day/month/year) | Patent family member(s) | | | Publication date (day/month/year) |
|---|---|---|---|---|---|---|---|
| CN | 109103496 | A | 28 December 2018 | None | | | |
| KR | 10-2014-0106645 | A | 03 September 2014 | CA | 2857491 | A1 | 06 June 2013 |
| | | | | CN | 104081573 | A | 01 October 2014 |
| | | | | CN | 104081573 | B | 16 January 2018 |
| | | | | EP | 2786441 | A1 | 08 October 2014 |
| | | | | EP | 2786441 | B1 | 20 December 2017 |
| | | | | EP | 3358046 | A1 | 08 August 2018 |
| | | | | EP | 3358046 | B1 | 11 September 2019 |
| | | | | EP | 3633077 | A1 | 08 April 2020 |
| | | | | ES | 2663420 | T3 | 12 April 2018 |
| | | | | ES | 2749122 | T3 | 19 March 2020 |
| | | | | JP | 2015-507316 | A | 05 March 2015 |
| | | | | JP | 2018-026358 | A | 15 February 2018 |
| | | | | JP | 6278518 | B2 | 14 February 2018 |
| | | | | JP | 6397108 | B2 | 26 September 2018 |
| | | | | KR | 10-2005984 | B1 | 31 July 2019 |
| | | | | US | 10128491 | B2 | 13 November 2018 |
| | | | | US | 2013-0327648 | A1 | 12 December 2013 |
| | | | | US | 9598789 | B2 | 21 March 2017 |
| | | | | WO | 2013-082330 | A1 | 06 June 2013 |
| JP | 10-83835 | A | 31 March 1998 | None | | | |
| JP | 09-22690 | A | 21 January 1997 | None | | | |
| US | 5595837 | A | 21 January 1997 | AU | 5850696 | A | 30 October 1996 |
| | | | | US | 5753388 | A | 19 May 1998 |
| | | | | WO | 96-32754 | A1 | 17 October 1996 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200037695
- KR 100291067